# EUROPÄISCHE PATENTSCHRIFT

(11) **EP 3 895 266 B1**
(45) Veröffentlichungstag und Bekanntmachung des Hinweises auf die Patenterteilung: **18.02.2026**
(21) Anmeldenummer: 18826253.9
(22) Anmeldetag: 14.12.2018
(51) Int. Cl.: H02G 1/12

(54) **EINRICHTUNG ZUM SCHNEIDEN, ZENTRIEREN ODER HALTEN EINES KABELS IN EINEM ABISOLIERKOPF SOWIE EINE KABELABISOLIERVORRICHTUNG**
APPARATUS FOR CUTTING, CENTERING OR RETAINING A CABLE IN A STRIPPING HEAD, AND CABLE-STRIPPING DEVICE
DISPOSITIF DE COUPE, DE CENTRAGE OU DE MAINTIEN D'UN CÂBLE DANS UNE TÊTE DE DÉNUDAGE AINSI QU'APPAREIL DE DÉNUDAGE DE CÂBLES

(43) Veröffentlichungstag der Anmeldung: 20.10.2021
(73) Patentinhaber: Schleuniger AG, 3608 Thun (CH)
(72) Erfinder: BLICKENSTORFER, Willi, 8143 Stallikon (CH); DESCHLER, Raphael, 3653 Oberhofen (CH)
(74) Vertreter: BOVARD AG
(86) Internationale Anmeldenummer: PCT/EP2018/084903
(87) Internationale Veröffentlichungsnummer: WO 2020/119916

(56) Entgegenhaltungen:
- EP-A1- 3 125 382
- EP-A2- 0 673 099
- WO-A1-2018/060880
- DE-U1- 202008 017 576

## Beschreibung

### Technisches Gebiet

Die vorliegende Erfindung bezieht sich auf eine Einrichtung für Abisolierköpfe, insbesondere auf eine Einrichtung zum Schneiden, Zentrieren oder Halten eines Kabels in einem Abisolierkopf. Speziell bezieht sich die Erfindung auf eine Einrichtung für einen rotativ schneidenden Abisolierkopf, der vorwiegend zum Abisolieren von Koaxialkabeln, aber auch von anderen Kabeln und Drähten benötigt wird. Dabei rotieren Messer um das Kabel und werden radial bis zur gewünschten Einschnitt-Tiefe zugestellt. Die vorliegende Erfindung betrifft aber auch eine Einrichtung, mit der ein Kabel in einem Abisolierkopf mittels Zentrierbacken zentriert oder gehalten werden kann. Die vorliegende Erfindung betrifft ausserdem auch eine Kabelabisoliervorrichtung, die eine erfindungsgemässe Einrichtung umfasst.

### Stand der Technik

Bei einem Koaxialkabel wird das Abisolieren stufenweise durchgeführt. Meistens durchtrennt der erste Einschnitt den äusseren Schutzmantel und den Schirm, worauf die abgetrennten Schichten sogleich abgezogen werden. Danach wird das Dielektrikum bis zum Innenleiter eingeschnitten und teilweise oder ganz abgezogen. Darauf wird der Schutzmantel bis auf den Schirm eingeschnitten und teilweise oder ganz abgezogen. Ein Teilabzug schützt den Schirm oder den Innenleiter vor dem Ausfransen bis zur weiteren Verarbeitung des Kabels.

Aus der EP0297484B1 ist eine Anordnung von mindestens drei in einer Ebene liegenden Halte-, Zentrier- oder Messerbacken für Abisoliervorrichtungen bekannt, bei der die Zentrierbacken oder Messer so zwangsgesteuert schieb- oder schwenkbar sind, dass jedem Kabeldurchmesser ein anderer Berührungspunkt einer jeden Schneide bzw. eine andere Berührungslinie einer jeden Zentrierfläche zugeordnet ist, wodurch die Standfestigkeit der Schneiden und Zentrierbacken erhöht wird. Die Verschiebung der Zentrier- und Messerbacken erfolgt entweder durch Hebel und Konen oder durch eine Scheibe mit Steuernuten, in welche Führungszapfen der Schneiden oder Zentrierbacken eingreifen.

Aus der WO2005046015A1 ist ein koaxialer Aufbau der aus der EP0297484B1 bekannten Anordnung von Zentrierbacken und Messerhaltern bekannt. Eine Riemenscheibe ist fest mit einem Spiralflansch verbunden, der zudem mittels Kugellager koaxial einen Kopfkörper trägt. Die Riemenscheibe und der Kopfkörper werden mittels Zahnriemen unabhängig voneinander, das heisst durch zwei getrennte Motoren und gegebenenfalls differenziert angetrieben. Durch eine Relativbewegung der Riemenscheibe gegenüber dem Kopfkörper wird ein Schliessen oder Öffnen der Messer bewirkt.

Ein anderes Beispiel einer Vorrichtung zur Abisolierung eines elektrischen Kabels mit zwei synchron betriebenen Motoren kann in WO2018060880A1 und DE202008017576U1 gefunden werden. Das Dokument EP3125382A1 offenbart eine Kabelklemmvorrichtung zur Aufweitung von Schirmen, mit mindestens zwei Klemmkörpern, die dazu ausgebildet sind, einen von denselben vollständig umgebenen Durchgang auszubilden, bei der die Klemmkörper zum Ändern der Grösse des Umfangs des Durchgangs aufeinander gleitbar sind.

Eine Messer- oder Zentrierbackenverstellung durch einen differenzierten Antrieb mit Hilfe von zwei synchron betriebenen Motoren ist regeltechnisch kostspielig und aufwändig, wobei sich je nach Lastmoment und Drehzahl immer ein kleiner Schleppfehler einstellt, der eine ungewollte Verstellung der Messer- und/oder Zentrierbackenöffnung ergibt.

Für einen differenzierten Antrieb würden sich Stepmotoren gut eignen. Diese haben jedoch den Nachteil, dass mit zunehmender Drehzahl das zulässige Antriebsmoment abnimmt, sodass die Drehzahl beim Einschneiden limitiert werden muss, um das Risiko von Schleppfehlern und Schrittverlusten in Grenzen zu halten. Schrittverluste würden beim Messerantrieb bis zur nächsten Referenzierung diskrete Fehler der Einschnitttiefe bewirken. Gleichermassen würden Schrittverluste beim Zentrierbackenantrieb diskrete Fehler des Führungsdurchmessers bewirken. Aus diesen Gründen wurde die Idee von zwei synchron betriebenen Motoren bis heute nie in grösserem Stil umgesetzt.

Aufgabe der vorliegenden Erfindung ist es, die vorhin beschriebenen Nachteile des differenzierten Antriebes mit Hilfe von zwei synchron betriebenen Motoren zu beseitigen und eine Einrichtung zum Schneiden, Zentrieren oder Halten eines Kabels vorzuschlagen, bei welcher der eine Motor nur für die Zustellung der Werkzeuge benötigt wird, während die bewährte mechanische Verstellung der Messer- und Zentrierbacken durch Spiralflansche oder Schwenkbewegungen der Messer- oder Zentrierbacken beibehalten werden soll.

### Zusammenfassung der Erfindung

Gemäss der vorliegenden Erfindung werden diese Ziele vor allem durch die Elemente der zwei unabhängigen Ansprüche erreicht. Weitere vorteilhafte Ausführungsformen gehen ausserdem aus den abhängigen Ansprüchen und der Beschreibung hervor.

Insbesondere werden die Ziele der vorliegenden Erfindung erreicht durch eine Einrichtung zum Schneiden, Zentrieren oder Halten eines Kabels in einem Abisolierkopf, umfassend ein erstes Zahnriemenrad und ein zweites Zahnriemenrad, die koaxial und synchron, jedoch winkelverstellbar zueinander um eine Drehachse drehbar sind, sowie einen mit dem ersten Zahnriemenrad koaxial verbundenen Werkzeugflansch, in dem eine mittige Öffnung angeordnet ist, durch die das Kabel ein- oder durchführbar ist, wobei der Werkzeugflansch ein oder mehrere beweglich angebrachte Werkzeuge umfasst, wobei die Werkzeuge durch das mit dem zweiten Zahnriemenrad verbundene Stellmittel in Bezug auf die gemeinsame Drehachse des ersten Zahnriemenrads und des zweiten Zahnriemenrads bewegbar sind wobei der radiale Abstand der Werkzeuge zur gemeinsamen Drehachse des ersten Zahnriemenrads und des zweiten Zahnriemenrads durch eine Winkelverdrehung zwischen dem ersten Zahnriemenrad und dem zweiten Zahnriemenrad, welche durch ein gemeinsames Antriebsmittel angetrieben sind, einstellbar ist.

Mit einer solchen Einrichtung ist es möglich, den radialen Abstand der Werkzeuge, die ein Kabel schneiden, zentrieren oder halten, in Bezug auf die Drehachse der Einrichtung nur mit einer Winkelverdrehung zwischen dem ersten Zahnriemenrad und dem zweiten Zahnriemenrad präzis einzustellen. Darüber hinaus benötigt die Einrichtung nur ein Antriebsmittel für das synchrone Antreiben des ersten Zahnriemenrads und des zweiten Zahnriemenrads. Im Gegensatz zu bekannten Einrichtungen besteht also kein Risiko, dass die Zahnriemenräder mit der Zeit nicht mehr synchron drehen, was zum Beispiel zu ungenauen Einschnittdurchmessern führen würde.

In einer ersten bevorzugten Ausführungsform der vorliegenden Erfindung umfasst die Einrichtung ein drittes Zahnriemenrad und ein viertes Zahnriemenrad, welche durch das Antriebsmittel antreibbar sind, wobei das erste Zahnriemenrad durch das dritte Zahnriemenrad über einen ersten Zahnriemen und das zweite Zahnriemenrad durch das vierte Zahnriemenrad über einen zweiten Zahnriemen antreibbar sind. Dadurch ist es einfach, das erste Zahnriemenrad und das zweite Zahnriemenrad synchron drehen zu lassen. Es ist auch möglich, die Einrichtung sehr kompakt und platzsparend zu bauen. Darüber hinaus ist es dadurch möglich, das dritte Zahnriemenrad und das vierte Zahnriemenrad entweder koaxial oder nicht koaxial anzuordnen. Das genaue Baudesign der erfindungsgemässen Einrichtung kann somit sehr flexibel gewählt werden.

In einer weiteren bevorzugten Ausführungsform der vorliegenden Erfindung umfasst die Einrichtung mindestens eine Umlenkrolle und eine Spannrolle, welche den zweiten Zahnriemen umlenken, vorzugsweise taillieren, wobei durch eine Positionsveränderung der Umlenkrolle und/oder der Spannrolle die Winkelverdrehung zwischen dem ersten Zahnriemenrad und dem zweiten Zahnriemenrad bewirkbar ist. Dadurch ist es möglich, lediglich mit einer Positionsveränderung der Umlenkrolle und/oder der Spannrolle, zum Beispiel eine rein translatorische Bewegung, die Winkelverdrehung zwischen dem ersten Zahnriemenrad und dem zweiten Zahnriemenrad zu bewirken und so die Position der Werkzeuge in Bezug auf die Drehachse der Einrichtung zu ändern. Die Einrichtung kann somit sehr kompakt gebaut werden.

In einer weiteren bevorzugten Ausführungsform der vorliegenden Erfindung sind das dritte Zahnriemenrad und das vierte Zahnriemenrad vereint. Dies stellt ein noch einfacheres Baudesign der Einrichtung dar.

In einer anderen bevorzugten Ausführungsform der vorliegenden Erfindung umfasst die Einrichtung einen unter Spannung gehaltenen Umlenkriemen, der das dritte Zahnriemenrad und das vierte Zahnriemenrad verbindet, sowie eine erste bewegbare Umlenkrolle, die entlang dem Umlenkriemen zwischen dem dritten Zahnriemenrad und dem vierten Zahnriemenrad angeordnet ist und den Umlenkriemen umlenkt, wobei durch eine Positionsveränderung der ersten bewegbaren Umlenkrolle die Winkelverdrehung zwischen dem ersten Zahnriemenrad und dem zweiten Zahnriemenrad bewirkbar ist. Dadurch ist es möglich, lediglich mit einer Positionsveränderung der ersten bewegbaren Umlenkrolle, zum Beispiel mit einer rein translatorischen Bewegung, die Winkelverdrehung zwischen dem ersten Zahnriemenrad und dem zweiten Zahnriemenrad zu bewirken und so die Position der Werkzeuge in Bezug auf die Drehachse der Einrichtung zu ändern. Dank der Position der ersten bewegbaren Umlenkrolle zwischen dem dritten Zahnriemenrad und dem vierten Zahnriemenrad ist die Spannung des ersten Zahnriemens oder des zweiten Zahnriemens nicht von der Position der Umlenkrolle abhängig. Dadurch kann die Zustellung der Werkzeuge präziser erfolgen und die Winkelverdrehung zwischen dem ersten Zahnriemenrad und dem zweiten Zahnriemenrad kann grösser ausgelegt werden.

In einer anderen bevorzugten Ausführungsform der vorliegenden Erfindung ist das Zentrum der ersten bewegbaren Umlenkrolle stets auf der Mittelsenkrechten zwischen dem Zentrum des dritten Zahnriemenrads und dem Zentrum des vierten Zahnriemenrads angeordnet, und der Durchmesser der ersten bewegbaren Umlenkrolle entspricht dem peripheren Abstand zwischen dem dritten Zahnriemenrad und dem vierten Zahnriemenrad. Mit einer solchen Anordnung verläuft der Abschnitt des Umlenkriemens zwischen dem dritten Zahnriemenrad und der ersten bewegbaren Umlenkrolle parallel zum Abschnitt des Umlenkriemens zwischen der ersten bewegbaren Umlenkrolle und dem vierten Zahnriemenrad. Dadurch gibt es einen linearen Zusammenhang zwischen dem Betrag der Positionsveränderung der ersten bewegbaren Umlenkrolle und der Winkelverdrehung zwischen dem ersten Zahnriemenrad und dem zweiten Zahnriemenrad.

In einer anderen bevorzugten Ausführungsform der vorliegenden Erfindung umfasst die Einrichtung mindestens eine erste nichtbewegbare Umlenkrolle und eine zweite nichtbewegbare Umlenkrolle sowie eine zweite bewegbare Umlenkrolle, die mit der ersten bewegbaren Umlenkrolle auf einem Schlitten angebracht ist, wobei die zweite bewegbare Umlenkrolle entlang dem Umlenkriemen zwischen der ersten nichtbewegbaren Umlenkrolle und der zweiten nichtbewegbaren Umlenkrolle angeordnet ist und den Umlenkriemen umlenkt und wobei durch eine translatorische Bewegung des Schlittens die Winkelverdrehung zwischen dem ersten Zahnriemenrad und dem zweiten Zahnriemenrad bewirkbar ist.

Mit einem solchen Mechanismus ist es möglich, mit einer rein translatorischen Bewegung des Schlittens die Winkelverdrehung zwischen dem ersten Zahnriemenrad und dem zweiten Zahnriemenrad zu bewirken und dadurch die Position der Werkzeuge in Bezug auf die Drehachse der Einrichtung zu ändern. Dieser Mechanismus hat weiter den Vorteil, dass der Umlenkriemen unabhängig von der Position der ersten bewegbaren Umlenkrolle immer unter der gleichen Spannung gehalten wird. Dies ermöglicht eine präzisere Zustellung der Werkzeuge und verhindert, dass der Umlenkriemen wegen einer zu hohen Spannung beschädigt wird.

In einer weiteren bevorzugten Ausführungsform der vorliegenden Erfindung umfasst die Einrichtung einen zweiten Motor, mit dem die Positionsveränderung der Umlenkrolle antreibbar ist, wodurch die Winkelverdrehung zwischen dem ersten Zahnriemenrad und dem zweiten Zahnriemenrad bewirkbar ist. Dadurch kann die Positionsänderung schnell, präzis und reproduzierbar erfolgen. Falls der zweite Motor mittels Computer kontrolliert wird, kann dies automatisch und mit hoher Geschwindigkeit erfolgen.

In einer anderen bevorzugten Ausführungsform der vorliegenden Erfindung umfasst die Einrichtung ein Planetengetriebe mit Hohlrad, Planetenrädern und Sonnenrad, wobei das Kreisen der Planetenräder um das Sonnenrad durch die Drehung des vierten Zahnriemenrads antreibbar ist, wobei durch das Kreisen der Planetenräder um das Sonnenrad eine Welle antreibbar ist, die mit dem dritten Zahnriemenrad verbunden ist, wobei das Sonnenrad drehbar um eine gemeinsame Drehachse des dritten Zahnriemenrads und des vierten Zahnriemenrads angebracht ist, und wobei die Winkelverdrehung zwischen dem ersten Zahnriemenrad und dem zweiten Zahnriemenrad durch eine Drehung des Sonnenrads bewirkbar ist.

Mit diesem Mechanismus kann die Winkelverdrehung zwischen dem ersten Zahnriemenrad und dem zweiten Zahnriemenrad und dementsprechend die Einstellung der Position der Werkzeuge durch eine Drehbewegung bewirkt werden. Dadurch kann eine Drehung des Sonnenrads in eine der gemeinsamen Rotation des ersten Zahnriemenrads und des zweiten Zahnriemenrads überlagerte Winkelverdrehung zwischen dem ersten Zahnriemenrad und dem zweiten Zahnriemenrad "übersetzt" werden. Diese Übersetzung der Winkelverdrehung ist unabhängig von der Rotationsgeschwindigkeit des ersten Zahnriemenrads und des zweiten Zahnriemenrads. Es ermöglicht eine besonders einfache und präzise Zustellung der Messer.

In einer weiteren bevorzugten Ausführungsform der vorliegenden Erfindung umfasst die Einrichtung einen zweiten Motor, mit dem die Drehung des Sonnenrads antreibbar ist, durch welche die Winkelverdrehung zwischen dem ersten Zahnriemenrad und dem zweiten Zahnriemenrad ermöglicht wird. Mit dem zweiten Motor kann die Positionsänderung reproduzierbar, schnell und präzis erfolgen. Falls der Motor mit einem Computer kontrolliert wird, kann dies auch voll automatisch erfolgen.

In einer weiteren bevorzugten Ausführungsform der vorliegenden Erfindung umfasst die Einrichtung ein drittes Zahnriemenrad und ein fünftes Zahnriemenrad, welche durch das Antriebsmittel antreibbar sind, wobei das erste Zahnriemenrad durch das dritte Zahnriemenrad über einen ersten Zahnriemen und das zweite Zahnriemenrad durch das fünfte Zahnriemenrad über einen zweiten Zahnriemen antreibbar sind, sowie ein Planetengetriebe mit Planetenrädern und einem mit dem fünften Zahnriemenrad verbundenen und antreibbaren Sonnenrad, wobei das Planetengetriebe innerhalb eines Hohlkörpers mit innerer Verzahnungangeordnet ist, wobei durch das Kreisen der Planetenräder um das Sonnenrad eine Welle antreibbar ist, die mit den Planetenrädern und dem dritten Zahnriemenrad verbunden ist, und wobei die Winkelverdrehung zwischen dem ersten Zahnriemenrad und dem zweiten Zahnriemenrad durch eine Drehung des Hohlkörpers bewirkbar ist.

Mit dieser Ausführungsform kann die Winkelverdrehung zwischen dem ersten Zahnriemenrad und dem zweiten Zahnriemenrad und dementsprechend die Einstellung der Position der Werkzeuge durch eine Drehbewegung des Hohlkörpers bewirkt werden. Es ermöglicht eine besonders einfache und präzise Zustellung der Messer.

In einer anderen bevorzugten Ausführungsform der vorliegenden Erfindung sind die Werkzeuge gleichmässig auf dem Werkzeugflansch angeordnet. Dies gewährleistet ein präzises Schneiden, Zentrieren oder Halten eines Kabels.

In einer weiteren bevorzugten Ausführungsform der vorliegenden Erfindung sind die Werkzeuge schwenkbar um Schwenkstifte auf dem Werkzeugflansch angebracht. Dadurch kann der Werkzeugflansch kompakt gebaut werden und die Stellmittel, mit welchen die Werkzeuge zugestellt werden, die Form von einfachen Stellstiften annehmen.

In einer weiteren bevorzugten Ausführungsform der vorliegenden Erfindung sind die Werkzeuge radial verschiebbar auf dem Werkzeugflansch angebracht. Dadurch kann das Stellmittel die Form eines Spiralflansches annehmen.

In einer anderen bevorzugten Ausführungsform der vorliegenden Erfindung ist die Winkelverdrehung zwischen dem ersten Zahnriemenrad und dem zweiten Zahnriemenrad mittels elektronischen Mitteln steuerbar. Dadurch kann die Zustellung der Messer voll automatisch erfolgen.

In einer weiteren bevorzugten Ausführungsform der vorliegenden Erfindung sind die Werkzeuge Messer. Dadurch kann ein Kabel schnell und präzis bearbeitet, z.B. abisoliert werden.

In einer anderen bevorzugten Ausführungsform der vorliegenden Erfindung umfasst die Einrichtung Detektionsmittel, mit welchen eine Berührung zwischen den Messern und dem elektrischen Leiter des zu bearbeitenden Kabels detektierbar ist. Dadurch kann detektiert werden, ob die Messer den elektrischen Leiter des Kabels berühren. Somit kann sichergestellt werden, dass die Messer den elektrischen Leiter nicht "verletzen". Mit einer solchen Berührungsdetektion kann die Einschnitttiefe für folgende Bearbeitungen optional laufend mit statistischen Methoden angepasst werden, oder die Schnittregelung greift aufgrund einer Berührungsdetektion schnell genug in den aktuellen Einschnittvorgang ein, noch bevor eine Schädigung des Leiters entstanden ist.

Die Berührungsdetektion kann auch dazu verwendet werden, um vor der Produktion mit Probe-Einschnitten bis zur Messer-Leiter-Berührung mit statistischen Methoden den optimalen Produktions-Einschnitt und Abzugsdurchmesser zu bestimmen.

Zudem kann das Detektionsmittel zur Steuerung der Einschnittposition oder Abzugslänge verwendet werden, indem bei anfänglich geschlossenen Messern das Kabel von Hand oder automatisch bis zur Berührung mit den Messern gebracht wird, worauf sich der Kabelhalter schliesst, sich die Messer öffnen und der Kabelhalter das Kabel in Bearbeitungsposition bringt.

In einer anderen bevorzugten Ausführungsform der vorliegenden Erfindung sind die Werkzeuge Zentrierbacken. Dadurch kann ein Kabel präzis zentriert und/oder gehalten werden.

In einer anderen bevorzugten Ausführungsform der vorliegenden Erfindung ist die Form der Umhüllung eines Kabels mit den Werkzeugen veränderbar. Dadurch kann die Umhüllung eines Kabels mit still stehenden Werkzeugen rund gedrückt oder durch Kneten aufgeweitet werden oder die Umhüllung kann durch auf ihr schleifend oder abrollend rotierende Werkzeuge umgeformt werden.

Die Ziele der vorliegenden Erfindung werden ausserdem auch durch eine Kabelabisoliervorrichtung umfassend eine erfindungsgemässe Einrichtung erreicht.

### Kurze Beschreibung der Zeichnungen

Figur 1 zeigt eine perspektivische Ansicht einer ersten Ausführungsform einer erfindungsgemässen Einrichtung.
Figur 2 zeigt eine Vorderansicht einer ersten Ausführungsform einer erfindungsgemässen Einrichtung.
Figur 3 zeigt eine perspektivische Schnittansicht einer ersten Ausführungsform einer erfindungsgemässen Einrichtung.
Figur 4a zeigt den Messerflansch mit den Messern in völlig geschlossener Position.
Figur 4b zeigt den Messerflansch mit den Messern in einer mittleren Position.
Figur 4c zeigt den Messerflansch mit den Messern in völlig offener Position.
Figur 5 zeigt eine perspektivische Ansicht einer zweiten Ausführungsform einer erfindungsgemässen Einrichtung.
Figur 6 zeigt eine perspektivische Schnittansicht einer zweiten Ausführungsform einer erfindungsgemässen Einrichtung.
Figur 7 zeigt eine perspektivische Ansicht einer dritten Ausführungsform einer erfindungsgemässen Einrichtung.
Figur 8 zeigt eine perspektivische Schnittansicht einer dritten Ausführungsform einer erfindungsgemässen Einrichtung.

### Bevorzugte Ausführungsformen der Erfindung

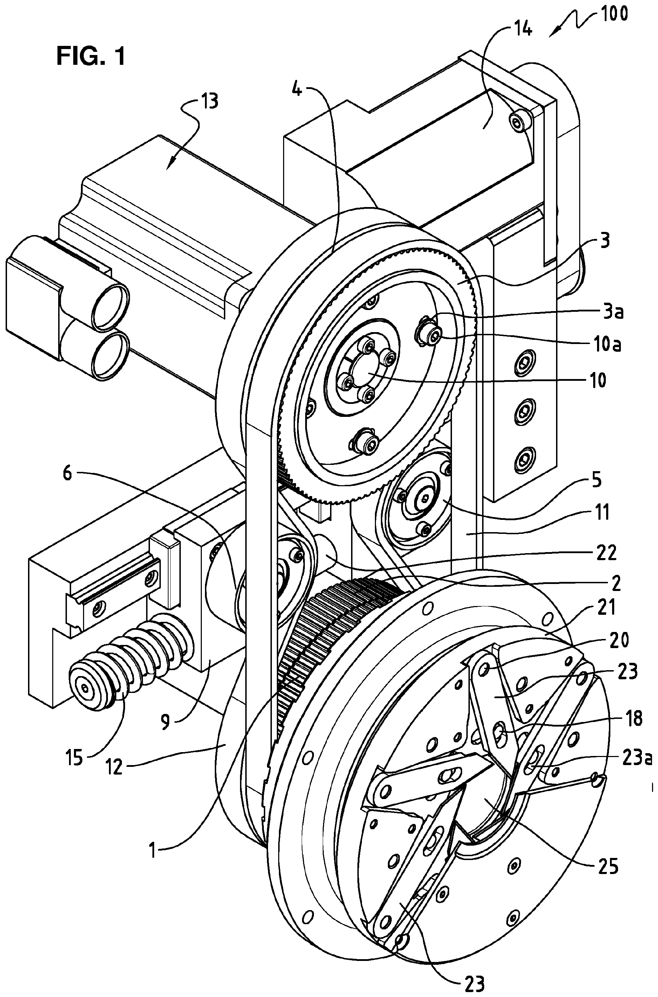

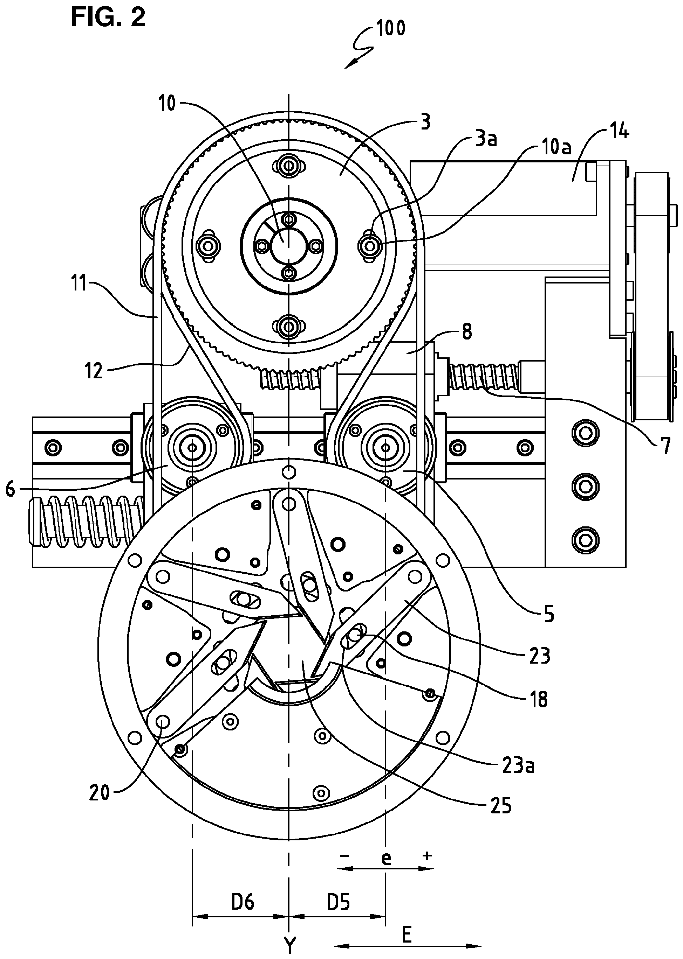

Figur 1 zeigt eine perspektivische Ansicht und Figur 2 eine Vorderansicht einer ersten Ausführungsform einer erfindungsgemässen Einrichtung 100. In dieser Ausführungsform werden ein drittes Zahnriemenrad 3 und ein viertes Zahnriemenrad 4 mit derselben Antriebswelle 10 von einem gemeinsamen Antriebsmittel, hier von einem ersten Motor 13, angetrieben. Zahnriemenräder 3 und 4 sind mittels Schrauben 10a verschraubt und drehen daher synchron. Zahnriemenrad 3 verfügt über Langlöcher 3a, was für eine relative Winkelverdrehung der Zahnriemenräder 3 und 4 zur Justierung der Messeröffnung benutzt werden kann.

Das dritte Zahnriemenrad 3 treibt über einen ersten Zahnriemen 11 ein erstes Zahnriemenrad 1 an, und das vierte Zahnriemenrad 4 treibt über einen zweiten Zahnriemen 12 ein zweites Zahnriemenrad 2 an. Das erste Zahnriemenrad 1 und das zweite Zahnriemenrad 2 drehen somit koaxial und synchron. Das erste Zahnriemenrad 1 und das zweite Zahnriemenrad 2 sind jedoch winkelverstellbar zueinander drehbar montiert. Das erste Zahnriemenrad 1 und das zweite Zahnriemenrad 2 definieren eine Öffnung A, durch die ein Kabel ein- oder durchführt werden kann oder Kabelbearbeitungsabfälle abgesaugt werden können.

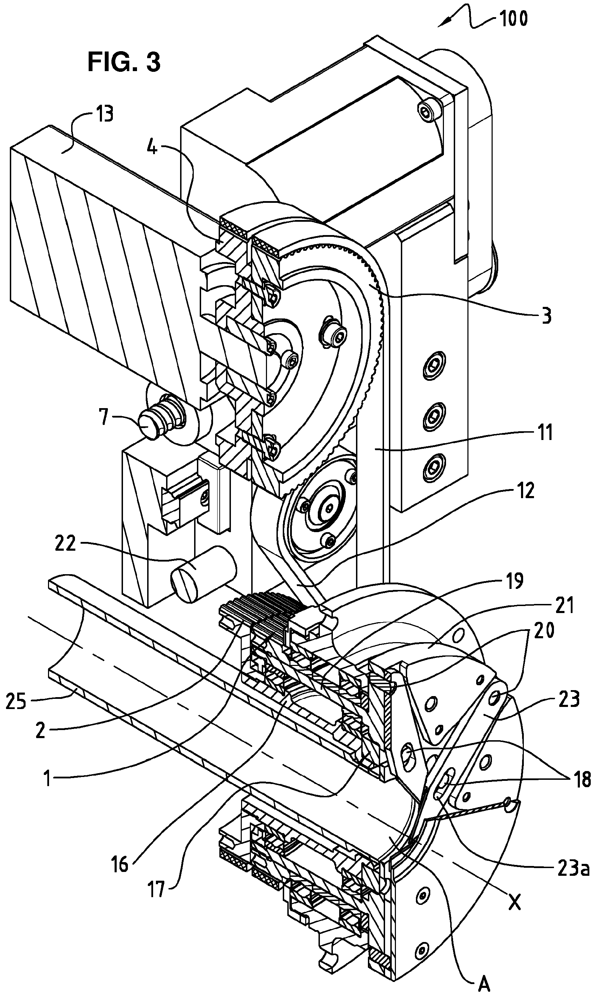

Anhand der Figur 3 ist ersichtlich, dass das zweite Zahnriemenrad 2 über eine Lagerhülse 16 und über einen Stellring 17 mit Stellstiften 18 verbunden ist. Das erste Zahnriemenrad 1 ist über einen Rotor 19 mit den Schwenkstiften 20 verbunden. Mit dem Rotor 19 verbunden ist auch ein Werkzeugflansch 21, hier ein Messerflansch, an welchem Werkzeuge 23, hier sind es Messer, um die Schwenkstifte 20 schwenkbar angebracht sind. Die Stellstifte 18 sind derart angeordnet, dass sie in die Messeröffnungen 23a eingreifen und somit sich die Messer 23 um die Schwenkstifte 20 schwenken lassen. Über die Winkelverdrehung zwischen dem ersten Zahnriemenrad 1 und dem zweiten Zahnriemenrad 2 kann somit ein gewünschter Messer-Schwenk-Winkel λ und. Schneiddurchmesser *Df* eingestellt werden.

Wie in den Figuren 1 bis 3 zu sehen ist, wird der zweite Zahnriemen 12 von einer Umlenkrolle 5 und einer Spannrolle 6 tailliert. Die Umlenkrolle 5 kann, in dieser Ausführungsform, durch einen zweiten Motor 14 über Spindel 7 und über einen ersten Schlitten 8 translatorisch verschoben werden. Ein zweiter Schlitten 9 ist über Federbolzen 22 und Feder 15 mit dem ersten Schlitten 8 verbunden.

Wie in Figur 2 dargestellt, wird die Symmetriestellung der Einrichtung 100 definiert als die Stellung, bei welcher der Abstand D5 der Umlenkrolle 5 zur Symmetrieachse Y gleich dem Abstand D6 der Spannrolle 6 zur Symmetrieachse Y ist. Durch Lösen der Schrauben 10a und Drehen des vierten Zahnriemenrads 4 relativ zum dritten Zahnriemenrad 3 kann ein Drehen des ersten Zahnriemenrads 1 relativ zum zweiten Zahnriemenrad 2 bewirkt werden, ohne dass ein Verschieben der Umlenkrolle 5 nötig ist. Damit drehen die Stellstifte 18 um die Drehachse X und schwenken die Messer 23. Dadurch kann die Position der Messer 23 in der Symmetriestellung einfach eingestellt werden.

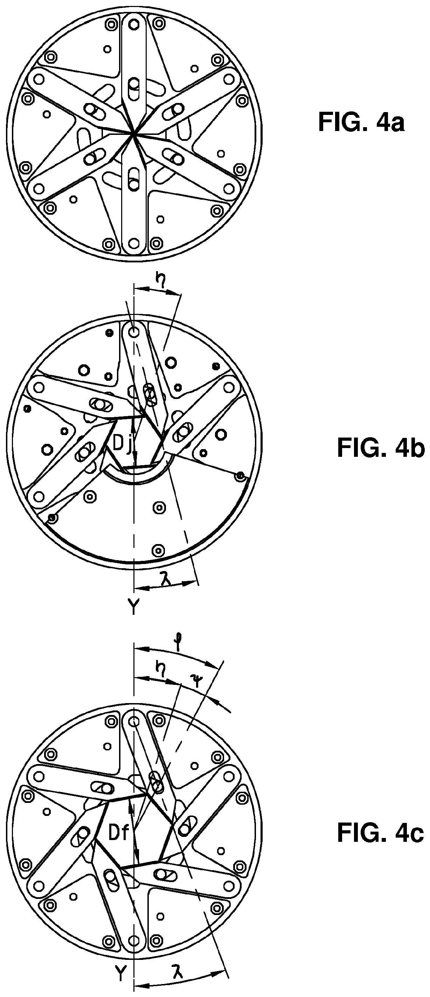

Figur 4a zeigt die Messer in der Position mit dem kleinsten Schneiddurchmesser Df.

Figur 4b zeigt die Messer in Justier-Position, die erreicht wird, indem in der Symmetriestellung durch Lösen der Schrauben 10a und Drehen des vierten Zahnriemenrads 4 relativ zum dritten Zahnriemenrad 3 das Drehen des zweiten Zahnriemenrads 2 relativ zum ersten Zahnriemenrad 1 und somit das Schliessen der Messer auf einen Justier-Schneid-Durchmesser Dj bewirkt wird. Die Stellstifte 18 sind in dieser Stellung bezüglich der Symmetrieachse Y um einen sogenannten Stellring-Justier-Winkel η gedreht, der in der Folge als Basis für den geometrischen Zusammenhang von Schneid-Durchmesser Df und Umlenkrollenverschiebung e dient.

Wird nun gemäss Figur 2 der erste Schlitten 8 mit der Umlenkrolle 5 von der Symmetriestellung nach rechts und entlang Richtung E verschoben, wird auch der zweite Schlitten 9 mit der Spannrolle 6 über den Federbolzen 22 und Feder 15 nach rechts verschoben, sodass die Spannrolle 6 an den zweiten Zahnriemen 12 gedrückt wird. Die horizontale Verschiebung e der Umlenkrolle 5 in Bezug auf die Symmetriestellung nach rechts bewirkt eine Verdrehung des zweiten Zahnriemenrads 2 relativ zum ersten Zahnriemenrad 1. Da der Stellring und die Stellstiften 18 mit dem zweiten Zahnriemenrad 2 verbunden sind, werden die Stellstifte 18 um einen sogenannten Stellring-Verdreh-Winkel ψ bezüglich des Werkzeugflansches und den Schwenkstiften verdreht. Wie in Figur 4c gezeigt, addiert sich dieser Stellring-Verdreh-Winkel ψ zum Stellring-Justier-Winkel η zum Stellring-Gesamt-Winkel φ,. Die Messer 23 werden durch die Stellstifte 18 geschwenkt und aus diesem Stellring-Gesamt-Winkel φ ergibt sich ein Schneid-Durchmesser *Df*. Wichtig zu bemerken ist, dass der Stellring-Verdreh-Winkel ψ unabhängig von der Rotationsgeschwindigkeit der Zahnriemenräder 1,2 ist und dass die Zahnriemenräder 1 und 2 wiederum synchron drehen, sobald der Schneid-Durchmesser Df eingestellt wurde. Die Einstellung des Stellring-Verdreh-Winkels ψ stellt dementsprechend lediglich eine Phasenverschiebung zwischen dem ersten Zahnriemenrad 1 und dem zweiten Zahnriemenrad 2 gegenüber dem Stellring-Justier-Winkel η dar.

Es wird hier darauf verzichtet, den genauen mathematischen Zusammenhang zwischen dem Betrag e der horizontalen Verschiebung der Umlenkrolle 5 und dem Schneid-Durchmesser *Df* herzuleiten. Ein Fachmann würde ohne Schwierigkeiten diesen Zusammenhang durch trigonometrische Überlegungen herleiten können. Es wird hier lediglich darauf hingewiesen, dass es für jeden Schneid-Durchmesser Df möglich ist, den Zusammenhang zwischen e und Df herzuleiten.

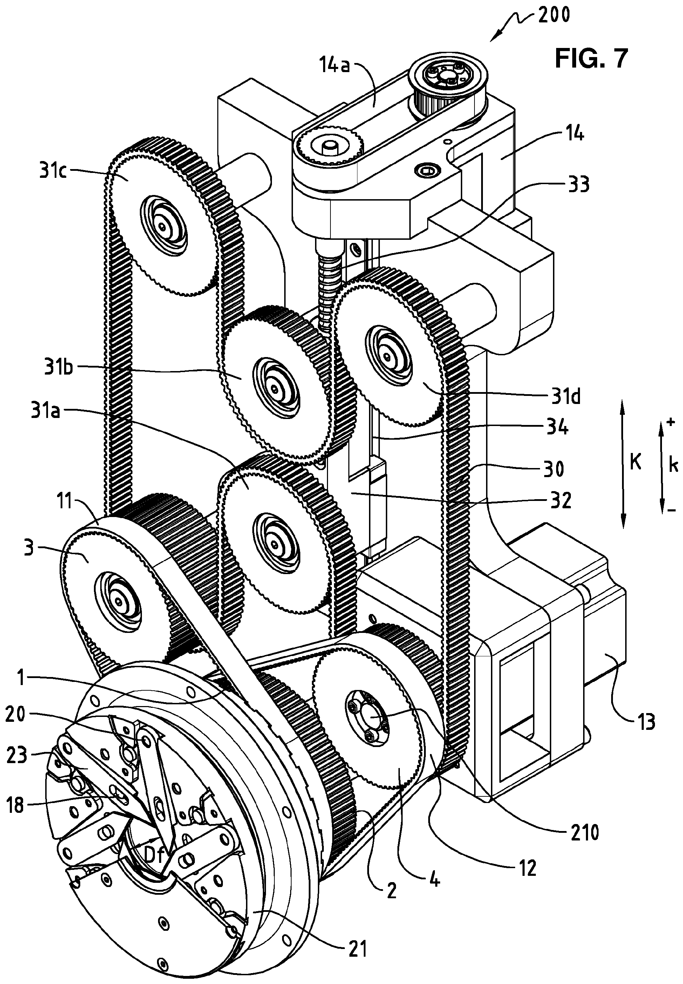

Figur 7 zeigt eine zweite bevorzugte Ausführungsform einer erfindungsgemässen Einrichtung 200. Komponenten, welche die gleiche Funktion wie in der ersten Ausführungsform übernehmen, sind hier mit den gleichen Referenzziffern bezeichnet. Anders als in der Einrichtung 100, sind die Zahnriemenräder 3 und 4 nicht koaxial angeordnet. Sie sind aber durch den gleichen ersten Motor 13, welcher die Welle 210 rotieren lässt, mit dem Umlenkriemen 30 synchron antreibbar. Wie in der Einrichtung 100, treibt das dritte Zahnriemenrad 3 über einen ersten Zahnriemen 11 ein erstes Zahnriemenrad 1 an, und das vierte Zahnriemenrad 4 treibt über einen zweiten Zahnriemen 12 ein zweites Zahnriemenrad 2 an. Das erste Zahnriemenrad 1 und das zweite Zahnriemenrad 2 drehen somit synchron. Die Zahnriemenräder 1,2 sind jedoch auch in dieser Ausführungsform winkelverstellbar zueinander drehbar montiert.

Der Umlenkriemen 30 wird mit den nichtbewegbaren Umlenkrollen 31c,31d umgelenkt, wobei die bewegbaren Umlenkrollen 31a und 31b an einem Schlitten 32 angebracht sind, der mittels Spindel 33 und Schiene 34 in Richtung *K* bewegbar ist. Die Spindel 33 wird vom zweiten Motor 14 und Motorriemen 14a angetrieben. Dank diesem Mechanismus kann der Abstand zwischen den Achsen der bewegbaren Umlenkrollen 31a,31b zu den Achsen der nichtbewegbaren Umlenkrollen 31c,31d und zu den Achsen der dritten und vierten Zahnriemenräder 3,4 verstellt werden.

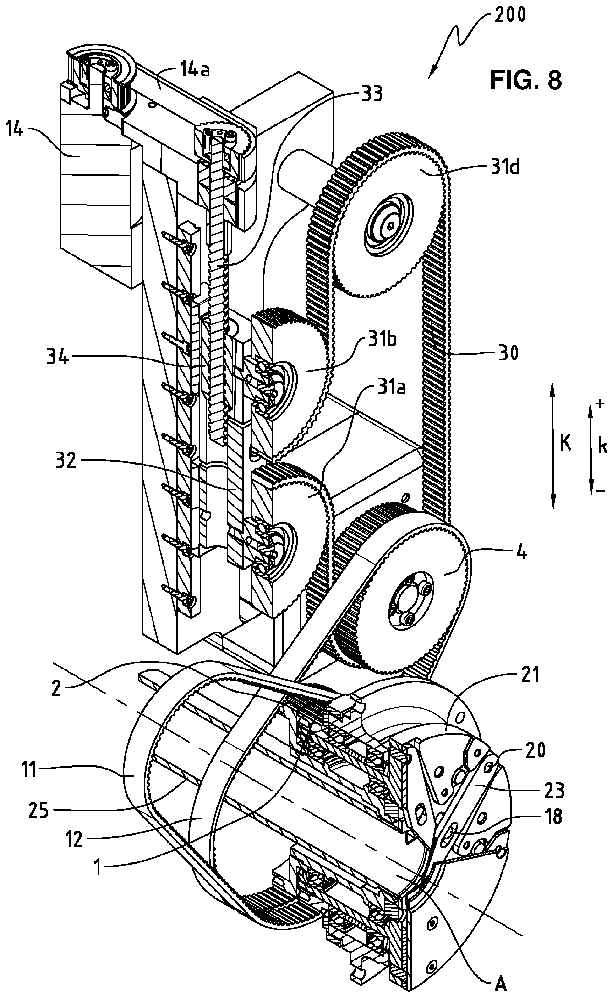

Wie aus Figur 7 leicht zu verstehen ist, bewirkt eine Verschiebung k der bewegbaren Umlenkrollen 31a und 31b in Richtung K gegenüber der Justierposition eine Drehung des ersten Zahnriemenrads 1 relativ zum zweiten Zahnriemenrad 2. Da die Stellstifte 18, genau wie in der Einrichtung 100 und wie in Figur 8 ersichtlich, mit dem zweiten Zahnriemenrad 2 verbunden sind, werden die Stellstifte 18 entsprechend der Verschiebung k um den sogenannten Stellring-Verdreh-Winkel ψ gedreht. Dieser Stellring-Verdreh-Winkel ψ addiert sich mit dem Stellring-Justier-Winkel η zum Stellring-Gesamt-Winkel φ, wie in Figur 4c gezeigt. Die Messer 23 werden durch die Stellstifte 18 verschoben, und aus diesem Stellring-Gesamt-Winkel φ ergibt sich ein Schneid-Durchmesser *Df*. Wichtig zu bemerken ist, dass der Verdreh-Winkel ψ auch hier unabhängig von der Rotationsgeschwindigkeit der Zahnriemenräder ist und dass die Zahnriemenräder 1 und 2 wiederum synchron drehen, sobald der Schneid-Durchmesser *Df* eingestellt wurde. Die Einstellung des Stellring-Verdreh-Winkels ψ stellt dementsprechend lediglich eine Phasenverschiebung zwischen den Zahnriemenrädern 1,2 gegenüber dem Stellring-Justier-Winkel η dar.

Anders als in der Einrichtung 100 wird der Stellring-Justier-Winkel η mit der Position des Schlittens 32 eingestellt. Um diese Justierposition herum wird dann der Schlitten entlang der Richtung K verschoben, um über den Stellring-Verdreh-Winkel ψ den Schneiddurchmesser *Df* einzustellen. Ein weiterer Unterschied zwischen Einrichtung 100 und Einrichtung 200 besteht im mathematischen Zusammenhang zwischen der Verschiebung e der Umlenkrolle 5 oder der Verschiebung k der bewegbaren Umlenkrollen 31a,31b und dem Stellring-Verdreh-Winkel ψ. Während bei der Einrichtung 100 eine nicht-lineare Beziehung zwischen Umlenkrollenverschiebung e und Stellring-Verdreh-Winkel ψ besteht, ergibt sich bei der Einrichtung 200 ein rein linearer Zusammenhang zwischen der Umlenkrollenverschiebung *k* und dem Stellring-Verdreh-Winkel ψ.

Falls eine der Umlenkrollen 31a,31b als Spannrolle ausgeführt wird, ist das vorzugsweise 31b, da die translatorisch angetriebene Umlenkrolle möglichst nahe dem dritten Zahnriemenrad 3 und dem vierten Zahnriemenrad 4 platziert sein sollte, um Schneiddurchmesserfehler durch Dehnung des Umlenkriemens zu minimieren. Vorteilhafterweise verlaufen die Abschnitte des Umlenkriemens 30 zwischen drittem Zahnriemenrad 3 und bewegbarer Umlenkrolle 31a sowie viertem Zahnriemenrad 4 und bewegbarer Umlenkrolle 31a parallel zueinander.

Es wird auch hier darauf verzichtet, den genauen mathematischen Zusammenhang zwischen *k* und dem Stellring-Verdreh-Winkel ψ herzuleiten. Ein Fachmann könnte ohne Schwierigkeiten diesen Zusammenhang durch trigonometrische Überlegungen herleiten. Genau wie bei der Einrichtung 100 ist es bei der Einrichtung 200 möglich, den Zusammenhang zwischen *k* und *Df* herzuleiten.

Wichtig zu bemerken ist, dass die Umlenkrollen 31b, 31c und 31d anders positioniert werden können, als in Figur 7 gezeigt, ohne dass die Funktion der Einrichtung 200 beeinträchtigt wird. Unabdingbar ist aber, dass diese Rollen die Funktion eines Längenkompensationsmechanismus aufnehmen. Wenn die bewegbare Umlenkrolle 31a bewegt wird, müssen eine oder mehrere der Umlenkrollen 31b, 31c und 31d dementsprechend verschoben werden, sodass die Spannung des Umlenkriemens 30 erhalten bleibt. Insbesondere muss gewährleistet werden, dass die Bewegung der bewegbaren Umlenkrolle 31a nicht dazu führt, dass der Umlenkriemen 30 reisst.

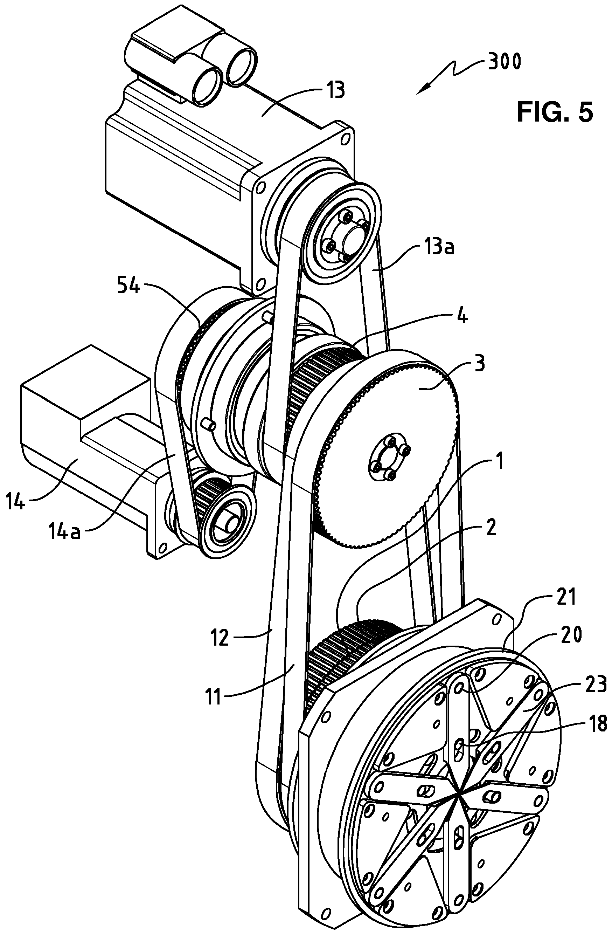

Eine dritte bevorzugte Ausführungsform einer erfindungsgemässen Einrichtung 300 ist in der Figur 5 gezeigt. In dieser Ausführungsform wird die Winkelverdrehung der sonst synchron drehenden Zahnriemenräder 1 und 2, und dadurch die Positionen der Stellstifte 18 gegenüber den Schwenkstiften 20 und somit der Schneiddurchmesser *Df* mit einem Planetengetriebe 50 bewirkt. Der Mechanismus zur Schwenkung der Messer mit Stellstiften 18 ist in dieser Ausführungsform identisch mit demjenigen der ersten und zweiten Ausführungsformen. Wie in Figur 5 ersichtlich, treibt ein erster Motor 13 mit einem ersten Motorzahnriemen 13a das vierte Zahnriemenrad 4 an. Das vierte Zahnriemenrad 4 treibt seinerseits mit dem zweiten Zahnriemen 12 das zweite Zahnriemenrad 2 an. Das dritte Zahnriemenrad 3 treibt mit dem ersten Zahnriemen 11 das erste Zahnriemenrad 1 an.

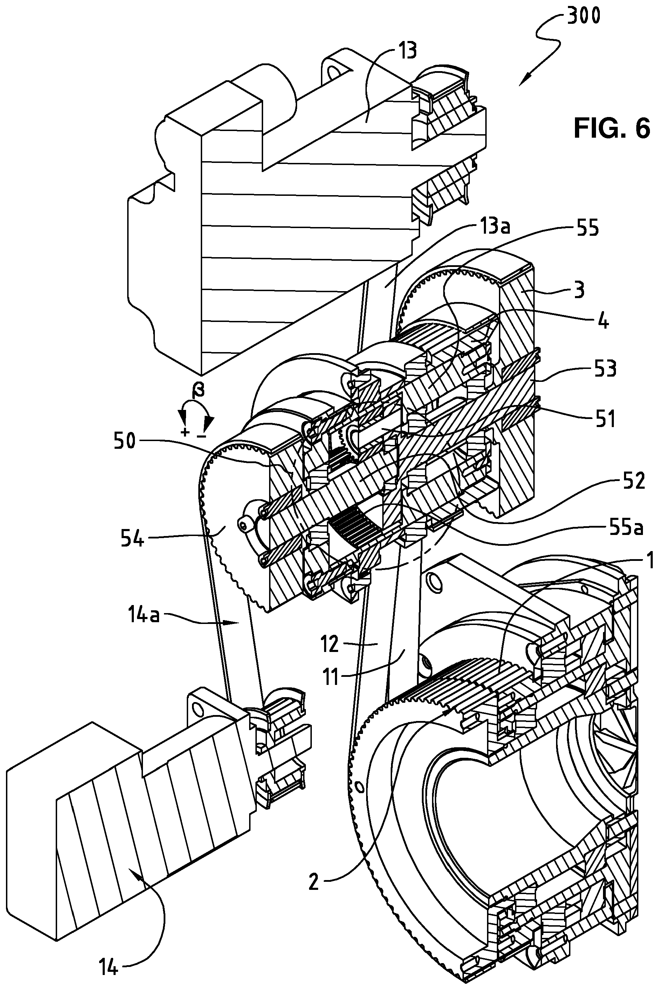

Wie in Figur 6 ersichtlich, ist das vierte Zahnriemenrad 4 mit einem Hohlkörper 55 verbunden, der über eine innere Verzahnung 55a verfügt. Ferner befindet sich innerhalb des Hohlkörpers 55 und in Verbindung mit der inneren Verzahnung 55a ein Planetengetriebe 50 mit Planetenrädern 51 und Sonnenrad 52. Bei stillstehendem Sonnenrad 52 kreisen die Planetenräder 51 aufgrund der Drehung des vierten Zahnriemenrads 4 und des Hohlkörpers 55 mit seiner inneren Verzahnung 55a um das Sonnenrad 52 in gleicher Drehrichtung wie das vierte Zahnriemenrad 4. Das Kreisen der Planetenräder 51 treibt eine Welle 53 an, die mit dem dritten Zahnriemenrad 3 verbunden ist. Die Zähnezahl beziehungsweise der Durchmesser des dritten Zahnriemenrads 3 ist so gewählt, dass das erste Zahnriemenrad 1 und das zweite Zahnriemenrad 2 bei stillstehendem Sonnenrad synchron drehen.

Mit dem zweiten Motor 14 kann über einen zweiten Motorzahnriemen 14a ein fünftes Zahnriemenrad 54, das mit dem Sonnenrad 52 verbunden ist, angetrieben werden. Die Drehung des fünften Zahnriemenrads 54 um Winkel β bewirkt somit die Drehung des Sonnenrads 52. Ein Drehen des Sonnenrads 52 in gleicher Richtung wie das vierte Zahnriemenrad 4 bewirkt ein schnelleres Kreisen der Planetenräder 51 und somit ein schnelleres Drehen der Welle 53 und des dritten Zahnriemenrads 3. Da das dritte Zahnriemenrad 3 das erste Zahnriemenrad 1 antreibt, wird demzufolge mit einer Verdrehung des Sonnenrads 52 um Winkel β eine Verdrehung der Zahnriemenräder 1,2 und ein Stellring-Verdreh-Winkel ψ bewirkt. Wie in den vorherigen bevorzugten Ausführungsformen bewirkt der oben beschriebene Mechanismus die Phasenverschiebung ψ und die Verstellung der Position der Messer 23. Wichtig zu bemerken ist, dass der Stellring-Verdreh-Winkel ψ auch hier unabhängig von der Rotationsgeschwindigkeit der Zahnriemenräder 1,2 ist und dass die Zahnriemenräder 1 und 2 wiederum synchron drehen, sobald der zweite Motor und das Sonnenrad still stehen und somit ein neuer Schneid-Durchmesser *Df* eingestellt ist. Die Einstellung des Stellring-Verdreh-Winkels ψ stellt dementsprechend lediglich eine Phasenverschiebung gegenüber der Justierstellung dar.

Es wird hier wiederum darauf verzichtet, den genauen mathematischen Zusammenhang zwischen dem Drehwinkel *β* des Sonnenrads 52 und dem Schneidedurchmesser *Df* herzuleiten. Ein Fachmann könnte ohne Schwierigkeiten diesen Zusammenhang durch trigonometrische Überlegungen herleiten. Es wird hier lediglich darauf hingewiesen, dass es auch hier möglich ist, den Zusammenhang zwischen *β* und *Df* herzuleiten. Anstatt das Sonnenrad 52 über das fünfte Zahnriemenrad 54 anzutreiben, könnte es auch direkt über einen Getriebemotor angetrieben werden.

Ein Fachmann wird leicht verstehen, dass die Messer 23 der Einrichtungen 100, 200 und 300 ohne weiteres durch Zentrierbacken ersetzt werden können. Die Zentrierbacken ermöglichen dann das Zentrieren oder Halten des Kabels in Richtung der Drehachse der ersten und zweiten Zahnriemenräder 1,2.

Es ist auch anzumerken, dass, obwohl in den hier präsentierten Ausführungsformen der Abstand der Messer 23 in Bezug auf Drehachse X mittels eines Schwenkmechanismus eingestellt wird, ein Fachmann selbstverständlich andere bekannte Schliess- bzw. Öffnungsmechanismen im Rahmen der vorliegenden Erfindung anwenden könnte. Insbesondere würde ein Fachmann erkennen, dass dafür ohne weiteres ein Spiralflansch eingesetzt werden könnte. Ein Spiralflansch würde insbesondere ermöglichen, dass die Messer 23 radial in Bezug auf die Drehachse X verschoben werden könnten.

Hier ist anzumerken, dass die Erfindung nicht auf die beschriebenen Ausführungsformen beschränkt ist. Die Erfidnung wird durch die Patentansprüche definiert.

### Bezugsliste

1. Erstes Zahnriemenrad
2. Zweites Zahnriemenrad
3. Drittes Zahnriemenrad
4. Viertes Zahnriemenrad
5. Umlenkrolle
6. Spannrolle
7. Spindel
8. Erster Schlitten
9. Zweiter Schlitten
10. Antriebswelle
11. Erster Zahnriemen
12. Zweiter Zahnriemen
13. Antriebsmittel, erster Motor
13a. Erster Motorzahnriemen
14. Zweiter Motor
14a. Zweiter Motorzahnriemen
15. Feder
16. Lagerhülse
17. Stellring
18. Stellmittel, Stellstifte
19. Rotor
20. Schwenkstifte
21. Werkzeugflansch
22. Federbolzen
23. Werkzeuge
25. Abzugrohr
30. Umlenkriemen
31a. erste bewegbare Umlenkrolle
31b. zweite bewegbare Umlenkrolle, bewegbare Spannrolle
31c. erste nichtbewegbare Umlenkrolle
31d. zweite nichtbewegbare Umlenkrolle
32. Schlitten
33. Spindel
34. Schiene
50. Planetengetriebe
51. Planetenräder
52. Sonnenrad
53. Welle
54. fünftes Zahnriemenrad
55. Hohlkörper
55a. innere Verzahnung des Hohlkörpers, Hohlrad
100. Einrichtung gemäss erster Ausführungsform
200. Einrichtung gemäss zweiter Ausführungsform
300. Einrichtung gemäss dritter Ausführungsform
λ Messer-Schwenk-Winkel
η. Stellring-Justier-Winkel
ψ. Stellring-Verdreh-Winkel
φ. Stellring-Gesamt-Winkel

## Patentansprüche

1. Einrichtung (100, 200, 300) zum Schneiden, Zentrieren oder Halten eines Kabels in einem Abisolierkopf, umfassend
ein erstes Zahnriemenrad (1), und ein zweites Zahnriemenrad (2), welche koaxial und synchron, jedoch winkelverstellbar zueinander drehbar sind, sowie
einen mit dem ersten Zahnriemenrad (1) koaxial verbundenen Werkzeugflansch (21), in dem eine mittige Öffnung (A) angeordnet ist, durch die ein Kabel ein- oder durchführbar ist, wobei der Werkzeugflansch (21) ein oder mehrere beweglich angebrachte Werkzeuge (23) umfasst, wobei die Werkzeuge (23) vorzugsweise Messer oder Zentrierbacken sind, wobei die Werkzeuge (23) vorzugsweise gleichmässig auf dem Werkzeugflansch (21) angeordnet sind, und wobei die Werkzeuge (23) durch das mit dem zweiten Zahnriemenrad (2) verbundenen Stellmittel (18) in Bezug auf die Drehachse (X) bewegbar sind,
wobei
der radiale Abstand der Werkzeuge (23) zur Drehachse (X) durch eine Winkelverdrehung zwischen dem ersten Zahnriemenrad (1) und dem zweiten Zahnriemenrad (2), welche durch ein gemeinsames Antriebsmittel (13) angetrieben sind, einstellbar ist.

2. Einrichtung (100, 200, 300) gemäss Anspruch 1, umfassend ein drittes Zahnriemenrad (3) und ein viertes Zahnriemenrad (4), welche durch das Antriebsmittel (13) antreibbar sind, wobei das erste Zahnriemenrad (1) durch das dritte Zahnriemenrad (3) über einen ersten Zahnriemen (11) und das zweite Zahnriemenrad (2) durch das vierte Zahnriemenrad (4) über einen zweiten Zahnriemen (12) antreibbar sind.

3. Einrichtung (100) gemäss Anspruch 2, umfassend mindestens eine Umlenkrolle (5) und eine Spannrolle (6), die den zweiten Zahnriemen (12) umlenken, vorzugsweise taillieren, wobei durch eine Positionsveränderung der Umlenkrolle (5) und/oder der Spanrolle (6) die Winkelverdrehung zwischen dem ersten Zahnriemenrad (1) und dem zweiten Zahnriemenrad (2) bewirkbar ist.

4. Einrichtung (100) gemäss Anspruch 3, wobei das dritte Zahnriemenrad (3) und das vierte Zahnriemenrad (4) vereint sind.

5. Einrichtung (200) gemäss Anspruch 2, umfassend
einen unter Spannung gehaltenen Umlenkriemen (30), der das dritte Zahnriemenrad (3) und das vierte Zahnriemenrad (4) verbindet, sowie
eine erste bewegbare Umlenkrolle (31a), die entlang dem Umlenkriemen (30) zwischen dem dritten Zahnriemenrad (3) und dem vierten Zahnriemenrad (4) angeordnet ist und den Umlenkriemen (30) umlenkt,
**dadurch gekennzeichnet dass** durch eine Positionsveränderung der ersten bewegbaren Umlenkrolle (31a) die Winkelverdrehung zwischen dem ersten Zahnriemenrad (1) und dem zweiten Zahnriemenrad (2) bewirkbar ist.

6. Einrichtung (200) gemäss Anspruch 5, wobei das Zentrum der ersten bewegbaren Umlenkrolle (31a) stets auf der Mittelsenkrechten zwischen dem Zentrum des dritten Zahnriemenrads (3) und dem Zentrum des vierten Zahnriemenrads (4) angeordnet ist und wobei der Durchmesser der ersten bewegbaren Umlenkrolle (31a) dem peripheren Abstand zwischen dem Zahnriemenrad (3) und dem Zahnriemenrad (4) entspricht.

7. Einrichtung (200) gemäss einem der Ansprüche Anspruch 5 oder 6, umfassend
mindestens eine erste nichtbewegbare Umlenkrolle (31c) und eine zweite nichtbewegbare Umlenkrolle (31d), sowie
eine zweite bewegbare Umlenkrolle oder Spannrolle (31b), die mit der ersten bewegbaren Umlenkrolle (31a) auf einem Schlitten (32) angebracht ist, wobei die zweite bewegbare Umlenk- oder Spannrolle (31b) entlang dem Umlenkriemen (30)zwischen der ersten nichtbewegbaren Umlenkrolle (31c) und der zweiten nichtbewegbaren Umlenkrolle (31d) angeordnet ist und den Umlenkriemen (30) umlenkt,
**dadurch gekennzeichnet, dass** durch eine translatorische Bewegung des Schlittens (32) die Winkelverdrehung zwischen dem ersten Zahnriemenrad (1) und dem zweiten Zahnriemenrad (2) bewirkbar ist.

8. Einrichtung (100, 200) gemäss einem der Ansprüche 3 oder 5 bis 7, umfassend einen zweiten Motor (14), mit dem die Positionsveränderung der Umlenkrolle antreibbar ist, wodurch die Winkelverdrehung zwischen dem ersten Zahnriemenrad (1) und dem zweiten Zahnriemenrad (2) bewirkbar ist.

9. Einrichtung (300) gemäss Anspruch 2, umfassend ein Planetengetriebe (50) mit Hohlrad (55a), Planetenrädern (51) und Sonnenrad (52), wobei das Kreisen der Planetenräder (51) um das Sonnenrad (52) durch die Drehung des vierten Zahnriemenrads (4) antreibbar ist, wobei durch das Kreisen der Planetenräder (51) um das Sonnenrad (52) eine Welle (53) antreibbar ist, die mit dem dritten Zahnriemenrad (3) verbunden ist, wobei das Sonnenrad (52) drehbar um eine gemeinsame Drehachse des dritten Zahnriemenrads (3) und des vierten Zahnriemenrads (4) angebracht ist und wobei die Winkelverdrehung zwischen dem ersten Zahnriemenrad (1) und dem zweiten Zahnriemenrad (2) durch eine Drehung des Sonnenrads (52) bewirkbar ist.

10. Einrichtung (300) gemäss Anspruch 9, umfassend einen zweiten Motor (14), mit dem die Drehung des Sonnenrads (52) antreibbar ist, durch welche die Winkelverdrehung zwischen dem ersten Zahnriemenrad (1) und dem zweiten Zahnriemenrad (2) bewirkbar ist.

11. Einrichtung (300) gemäss Anspruch 1, umfassend ein drittes Zahnriemenrad (3) und ein fünftes Zahnriemenrad (54), welche durch das Antriebmittel (13) antreibbar sind, wobei das erste Zahnriemenrad (1) durch das dritte Zahnriemenrad (3) über einen ersten Zahnriemen (11) und das zweite Zahnriemenrad (2) durch das fünfte Zahnriemenrad (54) über einen zweiten Zahnriemen (12) antreibbar sind, sowie
ein Planetengetriebe (50) mit Planetenrädern (51), und einem mit dem fünften Zahnriemenrad (54) verbundenen und antreibbaren Sonnenrad (52), wobei das Planetengetriebe (50) innerhalb eines Hohlkörpers (55) mit innerer Verzahnung (55a) angeordnet ist,
wobei durch das Kreisen der Planetenräder (51) um das Sonnenrad (52) eine Welle (53) antreibbar ist, die mit den Planetenrädern (51) und dem dritten Zahnriemenrad (3) verbunden ist, und
wobei die Winkelverdrehung zwischen dem ersten Zahnriemenrad (1) und dem zweiten Zahnriemenrad (2) durch eine Drehung des Hohlkörpers (55) bewirkbar ist.

12. Einrichtung (100, 200, 300) gemäss einem der vorherigen Ansprüche, wobei die Werkzeuge (23) schwenkbar um Schwenkstifte (20) oder radial verschiebbar auf dem Werkzeugflansch (21) angebracht sind.

13. Einrichtung (100, 200, 300) gemäss einem der vorherigen Ansprüche, wobei die Winkelverdrehung zwischen dem ersten Zahnriemenrad (1) und dem zweiten Zahnriemenrad (2) mit elektronischen Mitteln steuerbar ist.

14. Einrichtung (100, 200, 300) gemäss einem der vorherigen Ansprüche, umfassend Detektionsmittel, mit welchen eine Berührung zwischen Messern (23) und elektrischem Leiter des abzuisolierenden Kabels detektierbar ist.

15. Kabelabisoliervorrichtung umfassend eine Einrichtung gemäss einem der Ansprüche 1 bis 14.

## Claims

1. Apparatus (100, 200, 300) for cutting, centering or retaining a cable in a stripping head, comprising
a first toothed belt wheel (1) and a second toothed belt wheel (2), which are rotatable coaxially and synchronously, but however in an angularly adjustable way with respect to one another, as well as
a tool flange (21) coaxially connected to the first toothed belt wheel (1), in which tool flange a central opening (A) is disposed, through which a cable is able to be led or passed, the tool flange (21) comprising one or more movably attached tools (23), whereby the tools (23) are preferably blades or centering jaws, whereby the tools (23) are preferably disposed evenly on the tool flange (21), and whereby the tools (23) are movable in relation to the rotational axis (X) by means of the positioning means (18) connected to the second toothed belt wheel (2),
whereby
the radial distance of the tools (23) to the rotational axis (X) is adjustable through an angular rotation between the first toothed belt wheel (1) and the second toothed belt wheel (2), which are driven by a common drive means (13).

2. Apparatus (100, 200, 300) according to claim 1, comprising a third toothed belt wheel (3) and a fourth toothed belt wheel (4), which are drivable by means of the drive means (13), whereby the first toothed belt wheel (1) is drivable by the third toothed belt wheel (3) via a first toothed belt (11) and the second toothed wheel (2) by the fourth toothed belt wheel (4) via a second toothed belt (12).

3. Apparatus (100) according to claim 2, comprising at least one deflection roller (5) and one tensioning roller (6), which deflect, preferably waist, the second toothed belt (12), whereby the angular rotation between the first toothed belt wheel (1) and the second toothed belt wheel (2) is achievable through a position change of the deflection roller (5) and/or the tensioning roller (6).

4. Apparatus (100) according to claim 3, whereby the third toothed belt wheel (3) and the fourth toothed belt wheel (4) are united.

5. Apparatus (200) according to claim 2, comprising
a deflection belt (30) kept under tension, which connects the third toothed belt wheel (3) and the fourth toothed belt wheel (4), as well as
a first movable deflection roller (31a), which is disposed along the deflection belt (30) between the third toothed belt wheel (3) and the fourth toothed belt wheel (4) and deflects the deflection belt (30),
**characterized in that** the angular rotation between the first toothed belt wheel (1) and the second toothed belt wheel (2) is achievable through a position change of the first movable deflection roller (31a).

6. Apparatus (200) according to claim 5, whereby the center of the first movable deflection roller (31a) is always disposed on the perpendicular bisector between the center of the third toothed belt wheel (3) and the center of the fourth toothed belt wheel (4) and whereby the diameter of the first movable deflection roller (31a) corresponds to the peripheral distance between the toothed belt wheel (3) and the toothed belt wheel (4).

7. Apparatus (200) according to one of the claims 5 or 6, comprising
at least one first non-movable deflection roller (31c) and one second non-movable deflection roller (31d), as well as
a second movable deflection roller or tensioning roller (31b), which is installed with the first movable deflection roller (31a) on a carriage (32), whereby the second movable deflection or tensioning roller (31b) is disposed along the deflection belt (30) between the first non-movable deflection roller (31c) and the second non-movable deflection roller (31d) and deflects the deflection belt (30),
**characterized in that** the angular rotation between the first toothed belt wheel (1) and the second toothed belt wheel (2) is achievable through a translational movement of the carriage (32).

8. Apparatus (100, 200) according to one of the claims 3 or 5 to 7, comprising a second motor (14), with which the position change of the deflection roller is drivable, whereby the angular rotation between the first toothed belt wheel (1) and the second toothed belt wheel (2) is achievable.

9. Apparatus (300) according to claim 2, comprising a planetary gearing (50) with annulus gear (55a), planetary wheels (51) and sun wheel (52), whereby the circling of the planetary wheels (51) about the sun wheel (52) is drivable through the rotation of the fourth toothed belt wheel (4), whereby through the circling of the planetary wheels (51) about the sun wheel (52) a shaft (53) is drivable, which is connected to the third toothed belt wheel (3), whereby the sun wheel (52) is installed in a way rotatable about a common rotational axis of the third toothed belt wheel (3) and of the fourth toothed belt wheel (4) and whereby the angular rotation between the first toothed belt wheel (1) and the second toothed belt wheel (2) is achievable through a rotation of the sun wheel (52).

10. Apparatus (300) according to claim 9, comprising a second motor (14), with which the rotation of the sun wheel (52) is drivable, through which the angular rotation between the first toothed belt wheel (1) and the second toothed belt wheel (2) is achievable.

11. Apparatus (300) according to claim 1, comprising a third toothed belt wheel (3) and a fifth toothed belt wheel (54), which are drivable by means of the drive means (13), the first toothed belt wheel (1) being drivable by the third toothed belt wheel (3) via a first toothed belt (11) and the second toothed belt wheel (2) being drivable by the fifth toothed belt wheel (54) via a second toothed belt (12), as well as
a planetary gearing (50) with planetary wheels (51), and a sun wheel (52) connected and drivable with the fifth toothed belt wheel (54), whereby the planetary gearing (50) is disposed inside a hollow body (55) with inner toothing (55a),
whereby through the circling of the planetary wheels (51) around the sun wheel (52) a shaft (53) is drivable which is connected to the planetary wheels (51) and to the third toothed belt wheel (3), and
whereby the angular rotation between the first toothed belt wheel (1) and the second toothed belt wheel (2) is achievable through a rotation of the hollow body (55).

12. Apparatus (100, 200, 300) according to one of the preceding claims, whereby the tools (23) are installed on the tool flange (21) in a way swivel mounted about pivot pins (20) or in a radially displaceable way.

13. Apparatus (100, 200, 300) according to one of the preceding claims, whereby the angular rotation between the first toothed belt wheel (1) and the second toothed belt wheel (2) is controllable with electronic means.

14. Apparatus (100, 200, 300) according to one of the preceding claims, comprising detection means, with which a contact between blades (23) and electrical conductor of the cable to be stripped is detectable.

15. Cable-stripping device comprising an apparatus according to one of the claims 1 to 14.

## Revendications

1. Appareil (100, 200, 300) pour couper, centrer ou maintenir un câble dans une tête de dénudage, comprenant
une première roue à courroie dentée (1) et une deuxième roue à courroie dentée (2), qui peuvent tourner de manière coaxiale et synchrone, mais qui sont toutefois réglables angulairement l'une par rapport à l'autre, ainsi qu'
une bride d'outil (21) reliée coaxialement à la première roue à courroie dentée (1), dans laquelle est disposée une ouverture centrale (A) à travers laquelle un câble peut être guidé ou passé, la bride d'outil (21) comprenant un ou plusieurs outils fixés de manière mobile (23), les outils (23) étant de préférence des lames ou des mâchoires de centrage, les outils (23) étant de préférence disposés de manière uniforme sur la bride d'outil (21), et les outils (23) étant mobiles par rapport à l'axe de rotation (X) au moyen du dispositif de positionnement (18) relié à la deuxième roue à courroie dentée (2),
la distance radiale entre les outils (23) et l'axe de rotation (X) étant réglable par une rotation angulaire entre la première roue dentée à courroie (1) et la deuxième roue à courroie dentée (2), qui sont entraînées par un moyen d'entraînement commun (13).

2. Appareil (100, 200, 300) selon la revendication 1, comprenant une troisième roue à courroie dentée (3) et une quatrième roue à courroie dentée (4), qui peuvent être entraînées au moyen du moyen d'entraînement (13), la première roue dentée à courroie (1) pouvant être entraînée par la troisième roue à courroie dentée (3) via une première courroie dentée (11) et la deuxième roue à courroie dentée (2) par la quatrième roue à courroie dentée (4) via une deuxième courroie dentée (12).

3. Appareil (100) selon la revendication 2, comprenant au moins un rouleau de renvoi (5) et un rouleau tendeur (6), qui dévient, de préférence en la cintrant, la deuxième courroie dentée (12), la rotation angulaire entre la première roue à courroie dentée (1) de la courroie crantée et la deuxième roue à courroie dentée (2) pouvant être obtenue par un changement de position du rouleau de renvoi (5) et/ou du rouleau tendeur (6).

4. Appareil (100) selon la revendication 3, dans lequel la troisième roue à courroie dentée (3) et la quatrième roue à courroie dentée (4) sont unies l'une à l'autre.

5. Dispositif (200) selon la revendication 2, comprenant
une courroie de renvoi (30) maintenue sous tension, qui relie la troisième roue à courroie dentée (3) et la quatrième roue à courroie dentée (4), ainsi que
un premier rouleau de renvoi mobile (31a), qui est disposé le long de la courroie de renvoi (30) entre la troisième roue à courroie dentée (3) et la quatrième roue à courroie dentée (4) et qui dévie la courroie de renvoi (30),
**caractérisé en ce que** la rotation angulaire entre la première roue dentée (1) et la deuxième roue dentée (2) peut être obtenue par un changement de position du premier rouleau de renvoi mobile (31a).

6. Appareil (200) selon la revendication 5, dans lequel le centre du premier rouleau de déviation mobile (31a) est toujours disposé sur la médiatrice entre le centre de la troisième roue à courroie dentée (3) et le centre de la quatrième roue à courroie dentée (4) et dans lequel le diamètre du premier rouleau de déviation mobile (31a) correspond à la distance périphérique entre la roue à courroie dentée (3) et la roue à courroie dentée (4).

7. Appareil (200) selon l'une des revendications 5 ou 6, comprenant
au moins un premier rouleau de déviation non mobile (31c) et un deuxième rouleau de déviation non mobile (31d), ainsi qu'
un deuxième rouleau de déviation ou rouleau tendeur mobile (31b), qui est monté sur le premier rouleau de déviation mobile (31a) à l'aide d'un chariot (32), le deuxième rouleau de renvoi ou de tension mobile (31b) étant disposé le long de la courroie de renvoi (30) entre le premier rouleau de renvoi fixe (31c) et le deuxième rouleau de renvoi fixe (31d) et déviant la courroie de renvoi (30),
**caractérisé en ce que** la rotation angulaire entre la première roue dentée (1) et la deuxième roue dentée (2) peut être obtenue par un mouvement de translation du chariot (32).

8. Appareil (100, 200) selon l'une des revendications 3 ou 5 à 7, comprenant un deuxième moteur (14) avec lequel le changement de position du rouleau de déviation peut être entraîné, de sorte que la rotation angulaire entre la première roue à courroie dentée (1) et la deuxième roue à courroie dentée (2) peut être obtenue.

9. Appareil (300) selon la revendication 2, comprenant un engrenage planétaire (50) avec une couronne dentée (55a), des roues planétaires (51) et une roue solaire (52), la rotation des roues planétaires (51) autour de la roue solaire (52) pouvant être entraînée par la rotation de la quatrième roue à courroie dentée (4), le mouvement circulaire des roues planétaires (51) autour de la roue solaire (52) permettant d'entraîner un arbre (53) qui est relié à la troisième roue à courroie dentée (3), la roue solaire (52) étant montée de manière à pouvoir tourner autour d'un axe de rotation commun à la troisième roue à courroie dentée (3) et à la quatrième roue à courroie dentée (4), et la rotation angulaire entre la première roue à courroie dentée (1) et la deuxième roue à courroie dentée (2) pouvant être obtenue par la rotation de la roue solaire (52).

10. Appareil (300) selon la revendication 9, comprenant un deuxième moteur (14) grâce auquel la rotation de la roue solaire (52) peut être actionnée, et via lequel la rotation angulaire entre la première roue à courroie dentée (1) et la deuxième roue à courroie dentée (2) peut être obtenue.

11. Appareil (300) selon la revendication 1, comprenant une troisième roue à courroie dentée (3) et une cinquième roue à courroie dentée (54), qui peuvent être entraînées au moyen du moyen d'entraînement (13), la première roue à courroie dentée (1) pouvant être entraînée par la troisième roue à courroie dentée (3) via une première courroie dentée (11) et la deuxième roue à courroie dentée (2) pouvant être entraînée par la cinquième roue à courroie dentée (54) via une deuxième courroie dentée (12), ainsi qu'
un engrenage planétaire (50) avec des roues planétaires (51) et une roue solaire (52) reliée à la cinquième roue à courroie dentée (54) et pouvant être entraînée par celle-ci, l'engrenage planétaire (50) étant disposé à l'intérieur d'un corps creux (55) avec une denture intérieure (55a),
la rotation des roues planétaires (51) autour de la roue solaire (52) permettant d'entraîner un arbre (53) qui est relié aux roues planétaires (51) et à la troisième roue à courroie dentée (3), et
la rotation angulaire entre la première roue à courroie dentée (1) et la deuxième roue à courroie dentée (2) pouvant être obtenue par une rotation du corps creux (55).

12. Appareil (100, 200, 300) selon l'une des revendications précédentes, dans lequel les outils (23) sont montés sur la bride d'outil (21) de manière à pouvoir pivoter autour d'axes de pivotement (20) ou à pouvoir se déplacer radialement par rapport à celle-ci.

13. Appareil (100, 200, 300) selon l'une des revendications précédentes, dans lequel la rotation angulaire entre la première roue à courroie dentée (1) et la deuxième roue à courroie dentée (2) peut être contrôlée par des moyens électroniques.

14. Appareil (100, 200, 300) selon l'une des revendications précédentes, comprenant des moyens de détection permettant de détecter un contact entre des lames (23) et un conducteur électrique du câble à dénuder.

15. Dispositif de dénudage de câbles comprenant un appareil selon l'une des revendications 1 à 14.
